# EUROPÄISCHE PATENTSCHRIFT

(11) **EP 4 638 220 B1**
(45) Veröffentlichungstag und Bekanntmachung des Hinweises auf die Patenterteilung: **08.07.2026**
(21) Anmeldenummer: 23810340.2
(22) Anmeldetag: 22.11.2023
(51) Int. Cl.: B60W 30/14, B60W 30/18, B60W 50/14, B60W 60/00

(54) **VERFAHREN ZUM STEUERN EINES KRAFTFAHRZEUGS AN EINER LICHTSIGNALANLAGE, ELEKTRONISCHE RECHENEINRICHTUNG SOWIE KRAFTFAHRZEUG**
METHOD FOR CONTROLLING A MOTOR VEHICLE AT A SET OF TRAFFIC LIGHTS, ELECTRONIC COMPUTING DEVICE AND MOTOR VEHICLE
PROCÉDÉ DE COMMANDE D'UN VÉHICULE À MOTEUR AU NIVEAU D'UN ENSEMBLE DE FEUX DE CIRCULATION, DISPOSITIF INFORMATIQUE ÉLECTRONIQUE ET VÉHICULE À MOTEUR

(30) Priorität: 21.12.2022 DE 102022214240
(43) Veröffentlichungstag der Anmeldung: 29.10.2025
(73) Patentinhaber: VOLKSWAGEN AKTIENGESELLSCHAFT, 38440 Wolfsburg (DE)
(72) Erfinder: DETERING, Stefan, 38120 Braunschweig (DE); MÜNNING, Daniel, 38124 Braunschweig (DE)
(86) Internationale Anmeldenummer: PCT/EP2023/082692
(87) Internationale Veröffentlichungsnummer: WO 2024/132349

(56) Entgegenhaltungen:
- EP-A1- 3 133 455
- DE-A1- 102020 126 672
- DE-A1- 102020 201 385
- US-A1- 2021 171 032

## Beschreibung

Die Erfindung betrifft ein Verfahren zum Steuern eines Kraftfahrzeugs an einer Lichtsignalanlage, eine elektronische Recheneinrichtung für ein Kraftfahrzeug sowie ein Kraftfahrzeug.

In der US 10 467 487 B1 wird ein Bestimmen eines Zustands einer Verkehrsampel beschrieben. Hierbei erfolgt eine erste Analyse einer Szene, die die Ampel beinhaltet. Die erste Analyse führt zum Ausgeben eines ersten Klassifizierungsergebnisses sowie eines ersten Konfidenzwerts. Eine zweite, andere Analyse der Szene kann durchgeführt werden, die ebenfalls ein Klassifizierungsergebnis und einen Konfidenzwert ausgibt. In einem Fusionsprozess können die Klassifizierungsergebnisse auf der Grundlage der Konfidenzwerte und einer oder mehrerer Gewichtungsmetriken zu einem fusionierten Klassifizierungsergebnis verschmolzen werden. Ein Fahrzeug kann dann zumindest teilweise auf der Grundlage dieses fusionierten Klassifizierungsergebnisses gesteuert werden.

Weiterhin ist aus der US 2020/0225681 A1 ein Steuersystem für ein Fahrzeug bekannt, welches eine nach vorne gerichtete Kamera zum Erfassen einer Vielzahl von Bildern einer Straße vor dem Fahrzeug und eine Verarbeitungsvorrichtung umfasst. Die Verarbeitungsvorrichtung ist dazu eingerichtet, einem Fahrzeugführer des Fahrzeugs eine Rückmeldung zum Wechseln der Fahrspur auf eine neue Fahrspur, auf der das Fahrzeug noch nicht fährt, auf der Grundlage eines Endens einer aktuellen Fahrspur zu geben, wobei das Ende der aktuellen Fahrspur durch einen ersten Verkehrskegel angezeigt wird, der in der Vielzahl von Bildern identifiziert wurde. Weiterhin wird eine Entfernung des Fahrzeugs zu einem zweiten Verkehrskegel auf der Grundlage einer Position des Fahrzeugs aktualisiert, wobei der zweite Verkehrskegel verwendet wird, um den Fahrzeugbetrieb auf die neue Fahrspur zu beschränken.

Weiterhin ist aus der US 2022/0097708 A1 ein Verfahren zum Steuern eines Betriebs eines autonomen Fahrzeugs bekannt. Bei dem Verfahren kann eine Ampelerfassung an einer Kreuzung unter Verwendung eines sensorbasierten Ampeldetektors durchgeführt werden, um eine sensorbasierte Erfassungsausgabe zu erzeugen, wobei die sensorbasierte Erfassungsausgabe ein zugehöriges erstes Konfidenzniveau aufweist. Weiterhin kann eine Ampelerfassung an der Kreuzung unter Verwendung eines Fahrzeug-zu-Infrastrukturbasierten (V2I-basierten) Ampeldetektors durchgeführt werden, um eine V2I-basierte Erfassungsausgabe zu erzeugen, wobei die V2I-basierte Erfassungsausgabe ein zugehöriges zweites Konfidenzniveau aufweist. Bei dem Verfahren kann weiterhin als endgültige Ampelerkennungsausgabe ausgewählt werden, welche von der sensorbasierten Erkennungsausgabe und der V2I-basierten Erkennungsausgabe ein höheres zugehöriges Konfidenzniveau aufweist. Alternativ kann die endgültige Ampelerkennungsausgabe durch Verschmelzen der sensorbasierten Erkennungsausgabe und der V2I-basierten Erkennungsausgabe unter Verwendung eines ersten lernbasierten Klassifikators erfolgen. Der Betrieb des autonomen Fahrzeugs wird zumindest teilweise auf der Grundlage der endgültigen Ampelerkennungsausgabe gesteuert.

Zudem sind der DE 10 2020 126 672 A1 ein Fahrzeugführungssystem und ein Verfahren, jeweils zur Bereitstellung einer Fahrfunktion zur automatisierten Längsführung eines Fahrzeugs an einer Signalisierungseinheit, zu entnehmen. Das Fahrzeugführungssystem ist dazu eingerichtet ist, von ein oder mehreren Umfeldsensoren des Fahrzeugs erfasste Umfelddaten in Bezug auf ein in Fahrtrichtung vor dem Fahrzeug liegendes Umfeld des Fahrzeugs zu ermitteln. Weiter ist das Fahrzeugführungssystem dazu konfiguriert, auf Basis der Umfelddaten eine erste Signalisierungseinheit zu detektieren, die auf einer von dem Fahrzeug befahrenen Fahrbahn in Fahrtrichtung vor dem Fahrzeug liegt. Das Fahrzeugführungssystem ist zudem dazu eingerichtet, zu bestimmen, dass ein Widerspruch zwischen der auf Basis der Umfelddaten detektierten ersten Signalisierungseinheit und Kartendaten in Bezug auf ein von dem Fahrzeug befahrenes Fahrbahnnetz vorliegt. In Reaktion darauf, bewirkt das Fahrzeugführungssystem eine Nichtverfügbarkeitsausgabe, um einen Nutzer des Fahrzeugs darüber zu informieren, dass die auf Basis der Umfelddaten detektierte erste Signalisierungseinheit nicht bei der Fahrfunktion zur automatisierten Längsführung des Fahrzeugs berücksichtigt wird.

Kraftfahrzeuge können über ein Fahrerassistenzsystem verfügen, das in der Lage ist, die Lichtfarbe einer Lichtsignalanlage, welche umgangssprachlich auch als Ampel bezeichnet wird, zu erkennen und durch Weiterfahrt bei grüner erkannter Lichtfarbe oder einem Anhaltevorgang bei roter erkannter Lichtfarbe darauf zu reagieren. Der Aufbau von Kreuzungen mit Lichtsignalanlagen kann einfach bis hin zu sehr komplex sein. An allen Lichtsignalanlagen stehen dem Fahrerassistenzsystem nicht immer die gleiche Anzahl an Sensorquellen oder die gleiche Sensorgüte zur Verfügung. Nicht jede beliebig komplexe Situation von Kreuzungen mit Lichtsignalanlage kann sicher identifiziert werden. Fehlfunktionen des Fahrerassistenzsystems können beim Fahrer zu Frust führen, mit der Folge, dass die Fahrerassistenzfunktion deaktiviert wird. Alternativ kann eine Überschätzung der Möglichkeiten des Fahrerassistenzsystems auftreten, mit der Folge von gefährlichen Situationen.

Aufgabe der vorliegenden Erfindung ist es, eine Lösung zu schaffen, welche es ermöglicht, dass ein Kraftfahrzeug in Reaktion auf eine Lichtsignalanlage mittels eines Fahrerassistenzsystems in Abhängigkeit von einer Zuverlässigkeit der Erkennung des Zustands der Lichtsignalanlage gesteuert wird.

Diese Aufgabe wird erfindungsgemäß durch die Gegenstände der unabhängigen Ansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Die Erfindung betrifft ein Verfahren zum Steuern eines Kraftfahrzeugs an einer Lichtsignalanlage. Bei dieser Lichtsignalanlage handelt es sich um eine Infrastruktureinrichtung, welche umgangssprachlich auch als Ampel bezeichnet wird. Die Lichtsignalanlage ist dazu eingerichtet, für ein Steuern des Verkehrs Lichtsignale mit unterschiedlicher Farbe auszusenden. Hierbei signalisieren die jeweiligen Farben der Lichtsignale jeweilige unterschiedliche im Bereich der Lichtsignalanlage geltende Verkehrsregeln.

Bei dem Verfahren ist es vorgesehen, dass ein Zustand der Lichtsignalanlage mittels wenigstens einer Erfassungseinrichtung ermittelt wird. Hierbei charakterisiert der Zustand der Lichtsignale insbesondere, welche Farbe das Lichtsignal aufweist, welches die Lichtsignalanlage aussendet. Der Zustand der Lichtsignalanlage kann somit charakterisieren, dass die Lichtsignalanlage ein rotes Lichtsignal oder ein grünes Lichtsignal aussendet. Die Erfassungseinrichtung kann beispielsweise als Kameraeinrichtung ausgebildet sein, welche dazu eingerichtet ist, die Umgebung des Kraftfahrzeugs abbildende Umgebungsbilder aufzuzeichnen. Alternativ oder zusätzlich kann die Erfassungseinrichtung als Car-to-X-Kommunikationseinrichtung ausgebildet sein, welche dazu eingerichtet ist, über eine Car-to-Car-Kommunikation mit einem weiteren Kraftfahrzeug zu kommunizieren oder über eine Car-to-Infrastructure-Kommunikation mit der Lichtsignalanlage zu kommunizieren. Von dem weiteren Kraftfahrzeug und/oder der Lichtsignalanlage kann das Kraftfahrzeug eine Information über den Zustand der Lichtsignalanlage empfangen.

Bei dem Verfahren ist es weiterhin vorgesehen, dass in Abhängigkeit von wenigstens einem Einflussfaktor für die Erfassung des Zustands der Lichtsignalanlage ein Qualitätsmaß für den erfassten Zustand festgelegt wird. Der wenigstens eine Einflussfaktor beeinflusst, wie zuverlässig der von der Erfassungseinrichtung ermittelte Zustand der Lichtsignalanlage ist. Somit beeinflusst der Einflussfaktor, wie groß eine Fehlerwahrscheinlichkeit für den mittels der Erfassungseinrichtung ermittelten Zustand der Lichtsignalanlage ist. Bei dem Einflussfaktor kann es sich beispielsweise um eine Umgebungshelligkeit handeln, welche wesentlich eine Erkennungsgenauigkeit der Kameraeinrichtung beeinflussen kann. Weiterhin kann es sich bei dem Wetter um einen Einflussfaktor handeln, da bei Regen oder Schnee eine Erkennungsgenauigkeit des Zustands der Lichtsignalanlage anhand der Umgebungsbilder im Vergleich zu trockenem Wetter reduziert sein kann. Weiterhin kann beispielsweise ein Stand der Sonne relativ zu der Kameraeinrichtung wesentlich beeinflussen, wie gut der Zustand der Lichtsignalanlage in den Umgebungsbildern erkannt werden kann, da durch die Sonne beispielsweise ein Überbelichten der Umgebungsbilder ausgelöst werden kann. Ein weiterer Einflussfaktor kann eine gerätebedingte Genauigkeit der Erfassungseinrichtung sein. Eine Qualität einer Funkverbindung der Car-to-X-Kommunikation kann eine Fehlerwahrscheinlichkeit für das Ermitteln des Zustands der Lichtsignalanlage anhand der über die Funkverbindung empfangenen Information wesentlich beeinflussen. Das Qualitätsmaß beschreibt somit, wie zuverlässig und somit verlässlich der ermittelte Zustand der Lichtsignalanlage ist.

Bei dem Verfahren ist es vorgesehen, dass bei einem hohen ermittelten Qualitätsmaß das Kraftfahrzeug mittels einer Steuereinrichtung entsprechend dem ermittelten Zustand der Lichtsignalanlage längsgesteuert wird. Das bedeutet, dass das Kraftfahrzeug bei dem hohen Qualitätsmaß teilautomatisiert längsgesteuert werden kann und somit auf seiner Fahrt auf die Lichtsignalanlage zu beziehungsweise an der Lichtsignalanlage vorbei zumindest automatisiert längsgesteuert wird. Beispielsweise kann das Kraftfahrzeug dazu eingerichtet sein, in einem Automatisierungslevel 1 oder 2 oder 3 oder 4 oder 5 gemäß SAE-Standard J3016 beziehungsweise der Bundesanstalt für Straßenwesen betrieben zu werden.

Bei dem Verfahren ist es weiterhin vorgesehen, dass bei einem mittleren ermittelten Qualitätsmaß, welches niedriger ist als das hohe ermittelte Qualitätsmaß, eine Aufforderung zur Eingabe einer Bestätigung für einen Fahrzeuginsassen ausgegeben wird, wobei der Fahrzeuginsasse mittels der Aufforderung gebeten wird, den ermittelten Zustand der Lichtsignalanlage als richtig zu bestätigen oder als falsch abzulehnen. Die Aufforderung zur Eingabe der Bestätigung kann für den Fahrzeuginsassen beispielsweise mittels einer Bildschirmeinrichtung ausgegeben werden. Jeweilige in Reaktion auf das Ausgeben der Aufforderung getätigte Benutzereingaben des Fahrzeuginsassen können beispielsweise über eine Eingabeeinrichtung empfangen werden. Bei dieser Eingabeeinrichtung kann es sich um eine Eingabeeinrichtung des Kraftfahrzeugs, wie beispielsweise ein Bedienelement, oder um eine berührempfindliche Oberfläche der Bildschirmeinrichtung handeln. Alternativ kann es sich bei der Eingabeeinrichtung um ein Element eines mobilen elektronischen Endgeräts, wie beispielsweise eines Smart Devices, handeln. Wird eine die Bestätigung charakterisierende Benutzereingabe empfangen, dann wird das Kraftfahrzeug entsprechend dem ermittelten Zustand der Lichtsignalanlage mittels der Steuereinrichtung längsgesteuert. Das bedeutet, dass, wenn der Fahrzeuginsasse bestätigt, dass der Zustand der Lichtsignalanlage richtig ermittelt worden ist, das Kraftfahrzeug mittels der Steuereinrichtung längsgesteuert wird, wobei das Steuern in Abhängigkeit von dem ermittelten Zustand der Lichtsignalanlage erfolgt. Das bedeutet, dass, wenn ermittelt worden ist, dass das von der Lichtsignalanlage ausgesendete Lichtsignal rot ist, das Kraftfahrzeug mittels der Steuereinrichtung angehalten wird. Wird als Zustand der Lichtsignalanlage ermittelt, dass diese ein grünes Lichtsignal aussendet, dann wird mittels der Steuereinrichtung das Kraftfahrzeug relativ zu der Lichtsignalanlage bewegt, insbesondere auf einer Fahrspur an der Lichtanlage vorbei gesteuert. Wird eine die Ablehnung charakterisierende weitere Benutzereingabe empfangen, dann wird eine Übernahmeaufforderung an den Fahrzeuginsassen ausgegeben, welche charakterisiert, dass der Fahrzeuginsasse die Längssteuerung des Kraftfahrzeugs übernehmen soll. Kommuniziert der Fahrzeuginsasse somit dem Kraftfahrzeug in Form der Benutzereingabe, dass der Zustand der Lichtsignalanlage nicht richtig und somit falsch erkannt worden ist, dann wird nach Ausgeben der Übernahmeaufforderung die Steuerung des Kraftfahrzeugs an den Fahrzeuginsassen übergeben, sodass der Fahrzeuginsasse das Kraftfahrzeug in Reaktion auf den Zustand der Lichtsignalanlage steuern kann. Es wird somit vermieden, dass mittels der Steuereinrichtung das Kraftfahrzeug in einer Situation, in welcher der Zustand der Lichtsignalanlage von dem Kraftfahrzeug, beispielsweise von einer elektronischen Recheneinrichtung des Kraftfahrzeugs, falsch erkannt worden ist, längsgesteuert wird.

Bei dem Verfahren ist es weiterhin vorgesehen, dass bei einem niedrigen ermittelten Qualitätsmaß die Übernahmeaufforderung an den Fahrzeuginsassen ausgegeben wird. Bei dem ermittelten niedrigen Qualitätsmaß wird somit festgestellt, dass die Zuverlässigkeit der Ermittlung des Zustands der Lichtsignalanlage nicht dafür ausreicht, dass mittels der Steuereinrichtung das Kraftfahrzeug sicher in Reaktion auf den ermittelten Zustand der Lichtsignalanlage gesteuert werden kann. Infolgedessen wird die Übernahmeaufforderung an den Fahrzeuginsassen ausgegeben, sodass der Fahrzeuginsasse die Steuerung des Kraftfahrzeugs übernimmt. Bei dem Kraftfahrzeug erfolgt somit lediglich bei einem sicheren Ermitteln des Zustands der Lichtsignalanlage das automatisierte Längssteuern des Kraftfahrzeugs mittels der Steuereinrichtung. Ist der Zustand der Lichtsignalanlage lediglich mit geringer Sicherheit oder falsch ermittelt worden, dann wird die Übernahmeaufforderung an den Fahrzeuginsassen ausgegeben und die Verantwortung für das Steuern des Kraftfahrzeugs, insbesondere das Längssteuern des Kraftfahrzeugs, an den Fahrzeuginsassen übergeben. Bei dem Verfahren ist es somit vorgesehen, dass das Steuern des Kraftfahrzeugs mittels der Steuereinrichtung in Abhängigkeit von dem ermittelten Zustand der Lichtsignalanlage sowie in Abhängigkeit von dem ermittelten Qualitätsmaß erfolgt. Es wird somit bei dem Verfahren vermieden, dass das Kraftfahrzeug mittels der Steuereinrichtung automatisch längsgesteuert wird, wenn der Zustand der Lichtsignalanlage mit einer geringen Zuverlässigkeit beziehungsweise mit einer hohen Fehlerwahrscheinlichkeit ermittelt worden ist. Hierdurch können Kollisionen des Kraftfahrzeugs besonders gut vermieden werden.

In einer möglichen Ausgestaltung der Erfindung ist es vorgesehen, dass gemeinsam mit dem Ausgeben der Übernahmeaufforderung eine aktive Längssteuerung des Kraftfahrzeugs mittels der Steuereinrichtung deaktiviert wird. Durch das Deaktivieren der aktiven Längssteuerung des Kraftfahrzeugs kann eine positive Beschleunigung des Kraftfahrzeugs sofort reduziert werden, insbesondere auf null gesetzt werden, wodurch das Kraftfahrzeug langsamer wird. Infolgedessen hat der Fahrzeuginsasse besonders viel Zeit, um die Steuerung des Kraftfahrzeugs zu übernehmen. Eine Kollisionsgefahr des Kraftfahrzeugs mit einem Hindernis kann somit in einem Zeitraum von dem Ausgeben der Übernahmeaufforderung bis zu einem Übernehmen der Steuerung durch den Fahrzeuginsassen besonders gering gehalten werden.

In einer weiteren möglichen Ausgestaltung der Erfindung ist es vorgesehen, dass das Qualitätsmaß zusätzlich in Abhängigkeit von einer Komplexität einer durch die Lichtsignalanlage gesteuerten Verkehrsregelsituation ermittelt wird. Bei der durch die Lichtsignalanlage gesteuerten Verkehrsregelsituation kann es sich beispielsweise um eine Kreuzung handeln. Hierbei kann die Komplexität von einer Anzahl sowie einer jeweiligen Verlaufsrichtung von Fahrspuren abhängen. Liegen beispielsweise mehrere Fahrspuren mit unterschiedlichen Fahrtrichtungen vor, dann ist jede dieser Fahrspuren mit einer separaten Lichtsignalanlage zu steuern. Es können somit an einer Kreuzung für jede mehrere Fahrspuren aufweisende, auf die Kreuzung zu führende Straße mehrere unterschiedliche Lichtsignalanlagen vorgesehen sein. Infolgedessen kann eine Verwechslungsgefahr einer Zuordnung jeweiliger Lichtsignalanlagen zu jeweiligen Fahrspuren und somit eine Verwechslung bei der Erkennung des Zustands der Lichtsignalanlage, welche für das Kraftfahrzeug gilt, auftreten. Alternativ zu der komplizierten Ausgestaltung der Kreuzung mit den mehreren Fahrspuren für die jeweiligen zu der Kreuzung hin führenden Straßen kann mittels der Lichtsignalanlage alternativ ein einfacher Übergang, beispielsweise ein Bahnübergang, geregelt sein. Je geringer die Komplexität der durch die Lichtsignalanlage gesteuerten Verkehrsregelsituation ist, desto zuverlässiger kann das Kraftfahrzeug mittels der Steuereinrichtung längsgesteuert werden. Je geringer somit die Komplexität der durch die Lichtsignalanlage gesteuerten Verkehrsregelsituation ist, desto höher ist das Qualitätsmaß. Je höher die Komplexität der durch die Lichtsignalanlage gesteuerten Verkehrsregelsituation ist, desto geringer ist das Qualitätsmaß.

In diesem Zusammenhang kann es in einer weiteren Ausgestaltung der Erfindung vorgesehen sein, dass für das Ermitteln der Verkehrsregelsituation wenigstens die Anzahl an Fahrspuren und/oder der Verlauf der jeweiligen Fahrspuren und/oder eine Anzahl an Lichtsignalanlagen und/oder eine geometrische Zuordnung jeweiliger Lichtsignalanlagen zu jeweiligen Fahrspuren als Faktoren berücksichtigt werden. Für das Ermitteln der Anzahl an Fahrspuren können diejenigen Fahrspuren betrachtet werden, welche parallel zueinander angeordnet sind und gemeinsam einer auf die Kreuzung zu führenden Straße zugeordnet sind. Hierbei können lediglich Fahrspuren einer gemeinsamen Fahrtrichtung oder sowohl die Fahrspuren dieser Straße, welche mit ihrer Fahrtrichtung auf die Kreuzung zu ausgerichtet sind, als auch diejenigen Fahrspuren dieser Straße, welche mit ihrer Fahrtrichtung von der Kreuzung weg ausgerichtet sind, betrachtet werden. Hinsichtlich des Verlaufs der jeweiligen Fahrspuren kann insbesondere der Verlauf der jeweiligen Fahrspur in Fahrtrichtung hinter der Lichtsignalanlage betrachtet werden. Es kann somit ermittelt werden, bei welchen Fahrspuren es sich um jeweilige Abbiegespuren und bei welchen Fahrspuren es sich um jeweilige Geradeausfahrspuren handelt. Für Abbiegespuren in unterschiedliche Abbiegerichtungen sowie für eine Geradeausfahrspur können von der Lichtsignalanlage unterschiedliche Lichtsignale bereitgestellt werden. Für ein zuverlässiges Steuern des Kraftfahrzeugs anhand des von der Lichtsignalanlage ausgesandten Lichtsignals ist somit wichtig, dass eine richtige Zuordnung des von der Lichtsignalanlage ausgesandten Lichtsignals zu der Fahrspur, auf welcher sich das Kraftfahrzeug befindet, erfolgt. Die Anzahl an Lichtsignalanlagen in der Verkehrsregelsituation kann eine Fehlerwahrscheinlichkeit dafür beeinflussen, dass das Lichtsignal einer der Lichtsignalanlagen, welches eigentlich einer weiteren Fahrspur zugeordnet ist, fälschlicherweise der Fahrspur zugeordnet wird, auf welcher sich das Kraftfahrzeug befindet und infolgedessen das Kraftfahrzeug mittels der Steuereinrichtung anhand des falschen Lichtsignals gesteuert wird. Durch das Einbeziehen der Anzahl an Lichtsignalanlagen in das Ermitteln der Komplexität der Verkehrsregelsituation wird die Anzahl an Lichtsignalanlagen beim Erstellen des Qualitätsmaßes berücksichtigt. Die geometrische Zuordnung der Lichtsignalanlagen zu den jeweiligen Fahrspuren kann charakterisieren, welche der Lichtsignalanlagen zum Regeln des Verkehrs auf welcher der Fahrspuren vorgesehen ist. Je geringer die Fehlerwahrscheinlichkeit bei der geometrischen Zuordnung der Lichtsignalanlagen zu den Fahrspuren ist, desto höher ist das infolgedessen ermittelte Qualitätsmaß. Bei einer einfachen geometrischen Zuordnung der jeweiligen Lichtsignalanlagen zu den jeweiligen Fahrspuren, beispielsweise weil lediglich eine einzige Lichtsignalanlage und eine einzige Fahrspur vorliegen, kann daher ein höheres Qualitätsmaß ermittelt werden als bei einer uneindeutigeren geometrischen Zuordnung, bei welcher beispielsweise die jeweiligen Lichtsignalanlagen lediglich mit geringen Sicherheit zu jeweiligen Fahrspuren zugeordnet werden können. Bei diesem Verfahren wird sichergestellt, dass das Kraftfahrzeug lediglich dann mittels der Steuereinrichtung längsgesteuert wird, wenn die Komplexität der Verkehrsregelsituation es zulässt, dass der Zustand der Lichtsignalanlage mit ausreichender Zuverlässigkeit für eine Fahrspur ermittelt werden kann, auf welcher sich das Kraftfahrzeug befindet.

In einer weiteren möglichen Ausgestaltung der Erfindung ist es vorgesehen, dass als Einflussfaktor eine Art der wenigstens einen Erfassungseinrichtung berücksichtigt wird. Das bedeutet, dass das Qualitätsmaß in Abhängigkeit von einer Art der wenigstens einen Erfassungseinrichtung ermittelt wird. Unterschiedlichen Arten an Erfassungseinrichtungen können unterschiedliche Fehlerwahrscheinlichkeiten beim Ermitteln des Zustands der Lichtsignalanlage zugeordnet sein. Beispielsweise kann der Zustand der Lichtsignalanlage anhand der von der Lichtsignalanlage über die Car-to-Infrastructure-Kommunikation empfangenen Information mit geringerer Fehlerwahrscheinlichkeit festgestellt werden als anhand der mittels der Kameraeinrichtung aufgezeichneten, die Lichtsignalanlage darstellenden Umgebungsbilder. Je geringer die Fehlerwahrscheinlichkeit der jeweiligen Erfassungseinrichtung ist, desto höher ist das Qualitätsmaß für den mittels dieser Erfassungseinrichtung ermittelten Zustand der Lichtsignalanlage. Die jeweilige Zuverlässigkeit der Erfassungseinrichtung beim Ermitteln des Zustands der Lichtsignalanlage wird somit für das Ermitteln des Qualitätsmaßes mit einbezogen.

In einer weiteren möglichen Ausgestaltung der Erfindung ist es vorgesehen, dass als Einflussfaktor eine Anzahl an Erfassungseinrichtungen berücksichtigt wird. Das bedeutet, dass das Qualitätsmaß in Abhängigkeit von einer Anzahl an Erfassungseinrichtungen ermittelt wird, mittels welchen der Zustand der Lichtsignalanlage ermittelt wird. Je mehr Erfassungseinrichtungen für das Ermitteln des Zustands der Lichtsignalanlage herangezogen werden, desto präziser kann die Zuverlässigkeit und somit die Fehlerwahrscheinlichkeit für den ermittelten Zustand der Lichtsignalanlage bestimmt werden. Je mehr Erfassungseinrichtungen den Zustand derselben Lichtsignalanlage gleich ermitteln, desto höher ist das in Abhängigkeit davon ermittelte Qualitätsmaß für diesen erfassten Zustand. Weichen jeweilige mittels unterschiedlicher Erfassungseinrichtungen ermittelte Zustände der Lichtsignalanlage voneinander ab, dann können für das Ermitteln des Qualitätsmaßes die jeweiligen Arten und infolgedessen die jeweiligen Fehlerwahrscheinlichkeiten der einzelnen Erfassungseinrichtungen mit einbezogen werden. Für das Ermitteln des Qualitätsmaßes wird somit einbezogen, von wie vielen Erfassungseinrichtungen der jeweilige Zustand der Lichtsignalanlage ermittelt worden ist sowie wie die jeweilige Fehlerwahrscheinlichkeit beziehungsweise Genauigkeit der jeweiligen Erfassungseinrichtung ist. Es wird somit für das Ermitteln des Qualitätsmaßes die Zuverlässigkeit des ermittelten Zustands der Lichtsignalanlage durch die jeweiligen Erfassungseinrichtungen mit einbezogen.

In einer weiteren möglichen Ausgestaltung der Erfindung ist es vorgesehen, dass als Einflussfaktor eine aktuelle, nicht verkehrsbedingte Umgebungsbedingung berücksichtigt wird. Das bedeutet, dass das Qualitätsmaß in Abhängigkeit von wenigstens einer aktuellen, nicht verkehrsbedingten Umgebungsbedingung ermittelt wird. Bei dieser aktuellen, nicht verkehrsbedingten Umgebungsbedingung kann es sich um einen Einflussfaktor handeln, welcher eine Erfassungsgenauigkeit der Erfassungseinrichtung beeinflusst. Beispielsweise kann das Wetter die Zuverlässigkeit des Ermittelns des Zustands der Lichtsignalanlage anhand der Umgebungsbilder beeinflussen. Regen oder Schnee oder Wind, welcher Objekte durch die Luft wirbelt, oder Nebel können die Erkennungsgenauigkeit der Lichtsignalanlage, insbesondere des Zustands der Lichtsignalanlage, in den Umgebungsbildern negativ beeinflussen. Weiterhin könnten Menschen als Einflussfaktor eine Erkennbarkeit des Zustands der Lichtsignalanlage mittels der Kameraeinrichtung beeinflussen, beispielsweise durch zumindest bereichsweises Verdecken der Lichtsignalanlage. Weiterhin kann ein Verdecken der Lichtsignalanlage durch Vegetation, insbesondere Bäume mit oder ohne Laub, erfolgen. Durch das Einbeziehen der aktuellen, nicht verkehrsbedingten Umgebungsbedingungen kann das Qualitätsmaß für eine aktuelle Situation, in welcher sich das Kraftfahrzeug befindet, besonders verlässlich ermittelt werden.

In einer weiteren möglichen Ausgestaltung der Erfindung ist es vorgesehen, dass das Qualitätsmaß in Abhängigkeit von einem Gütemaß für die Erkennung des Zustands der Lichtsignalanlage ermittelt wird. Dieses Gütemaß ist der Lichtsignalanlage zugeordnet und beschreibt, wie hoch ein Anteil an Ereignissen ist, bei welchen der Zustand der Lichtsignalanlage mittels jeweiliger Kraftfahrzeuge richtig erkannt worden ist, anteilig an jeweiligen Ereignissen, bei welchen der Zustand der Lichtsignalanlage von Kraftfahrzeugen analysiert worden ist. Beispielsweise kann das Gütemaß beschreiben, dass in 80 Prozent der Fälle der Zustand der Lichtsignalanlage mittels jeweiliger Recheneinrichtungen von Kraftfahrzeugen richtig erkannt worden ist. Das Qualitätsmaß beschreibt somit, wie hoch eine Fehlerwahrscheinlichkeit beim Ermitteln der betrachteten Lichtsignalanlage ist. Das Qualitätsmaß kann somit besonders gut auf die jeweilige Lichtsignalanlage angepasst erstellt werden.

Die Erfindung betrifft des Weiteren eine elektronische Recheneinrichtung für ein Kraftfahrzeug, welche dazu eingerichtet ist, einen von einer Erfassungseinrichtung ermittelten Zustand einer Lichtsignalanlage zu empfangen. Die elektronische Lichtsignalanlage ist des Weiteren dazu eingerichtet, in Abhängigkeit von einem Erfassungsvorgang der Lichtsignalanlage mittels der Erfassungseinrichtung ein Qualitätsmaß für den erfassten Zustand festzulegen. Weiterhin ist die elektronische Recheneinrichtung dazu eingerichtet, bei einem hohen ermittelten Qualitätsmaß ein Längssteuern des Kraftfahrzeugs mittels einer Steuereinrichtung entsprechend dem ermittelten Zustand der Lichtsignalanlage auszulösen. Darüber hinaus ist die elektronische Recheneinrichtung dazu eingerichtet, bei einem mittleren ermittelten Qualitätsmaß ein Ausgeben einer Aufforderung zur Eingabe einer Bestätigung für einen Fahrzeuginsassen auszulösen, wobei der Fahrzeuginsasse mittels der Aufforderung gebeten wird, den ermittelten Zustand der Lichtsignalanlage als richtig zu bestätigen oder als falsch abzulehnen. Dabei ist die elektronische Recheneinrichtung dazu eingerichtet, bei Empfangen einer die Bestätigung charakterisierenden Benutzereingabe ein Längssteuern des Kraftfahrzeugs mittels der Steuereinrichtung entsprechend dem ermittelten Zustand der Lichtsignalanlage auszulösen. Darüber hinaus ist die elektronische Recheneinrichtung dazu eingerichtet, bei Empfangen einer die Ablehnung charakterisierenden weiteren Benutzereingabe ein Ausgeben einer Übernahmeaufforderung an den Fahrzeuginsassen auszulösen, welche charakterisiert, dass der Fahrzeuginsasse die Längssteuerung des Kraftfahrzeugs übernehmen soll. Die elektronische Recheneinrichtung ist des Weiteren dazu eingerichtet, bei einem niedrigen ermittelten Qualitätsmaß ein Ausgeben der Übernahmeaufforderung an den Fahrzeuginsassen auszulösen. Die elektronische Recheneinrichtung ist somit dazu eingerichtet, in einem Verfahren zum Steuern eines Kraftfahrzeugs an einer Lichtsignalanlage, wie es bereits im Zusammenhang mit dem erfindungsgemäßen Verfahren beschrieben worden ist, eingesetzt zu werden.

Die Erfindung betrifft des Weiteren ein Kraftfahrzeug, mit einer elektronischen Recheneinrichtung, wie sie bereits im Zusammenhang mit der elektronischen Recheneinrichtung beschrieben worden ist. Weiterhin umfasst das Kraftfahrzeug wenigstens eine Erfassungseinrichtung, welche dazu eingerichtet ist, einen Zustand einer Lichtsignalanlage zu ermitteln. Darüber hinaus umfasst das Kraftfahrzeug eine Steuereinrichtung, welche dazu eingerichtet ist, das Kraftfahrzeug in Abhängigkeit von dem ermittelten Qualitätsmaß zumindest längszusteuern. Die Steuereinrichtung kann Teil eines Fahrerassistenzsystems des Kraftfahrzeugs sein, welches dazu eingerichtet ist, dem Fahrer des Kraftfahrzeugs beim Steuern des Kraftfahrzeugs zu assistieren beziehungsweise das Kraftfahrzeug teilautomatisiert zu steuern.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht einer Kreuzung mit mehreren Lichtsignalanlagen; und
- Fig. 2: ein Verfahrensschema für ein Verfahren zum Steuern eines Kraftfahrzeugs an einer Lichtsignalanlage.

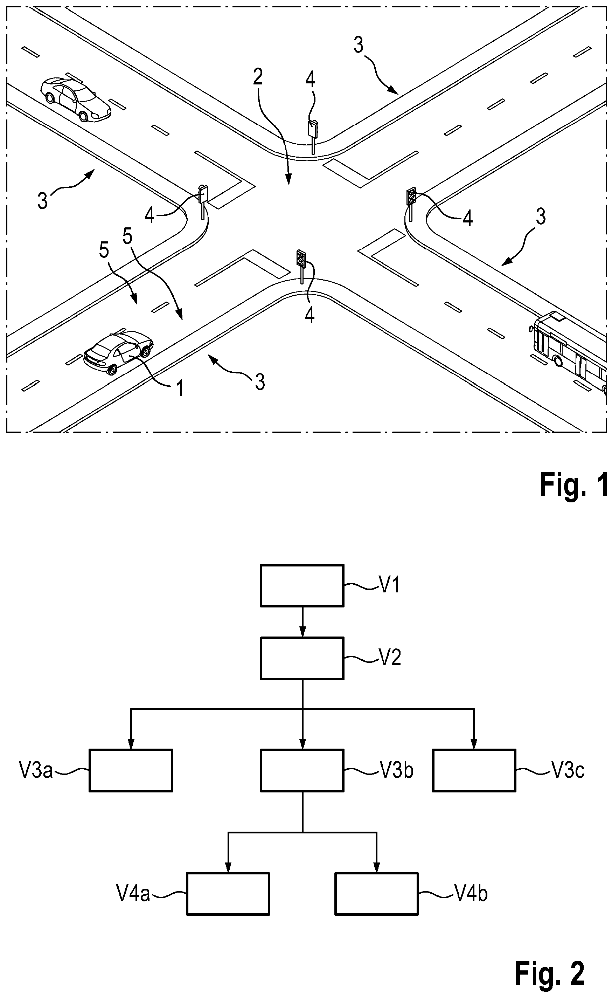

In Fig. 1 ist eine Verkehrsregelsituation in einer schematischen Perspektivansicht gezeigt, bei welcher ein Kraftfahrzeug 1 auf eine Kreuzung 2 zu fährt, in welcher sich vier Straßen 3 treffen. Die Verkehrssituation an der Kreuzung 2 wird mittels jeweiliger Lichtsignalanlagen 4 gesteuert. Hierbei ist vorliegend für jede Straße 3 eine Lichtsignalanlage 4 vorgesehen, welche den Verkehr auf der zugeordneten Straße 3 steuert. Die Lichtsignalanlage 4 wird im Folgenden auch - wie umgangssprachlich gewohnt - als Ampel bezeichnet. Vorliegend weist jede Straße 3 jeweils eine Fahrspur 5 für einander entgegengerichtete Fahrtrichtungen auf. Eine Zuordnung jeweiliger Lichtsignalanlagen 4 ist somit in der in Fig. 1 gezeigten Verkehrsregelsituation eindeutig, da die jeweiligen Lichtsignalanlagen 4 mit ihrem Signalgeberbereich, in welchem ein Lichtsignal mittels der jeweiligen Lichtsignalanlage 4 ausgegeben wird, auf die jeweilige Fahrspur 5 der jeweiligen Straße 3, deren Fahrtrichtung auf die Kreuzung 2 hin führt, ausgerichtet ist. Das bedeutet, dass das Lichtsignal der jeweiligen Lichtsignalanlage 4 zumindest im Wesentlichen lediglich von Kraftfahrzeugen 1 erkannt werden kann, welche sich auf derjenigen Fahrspur 5 befinden, welche der jeweiligen Lichtsignalanlage 4 zugeordnet ist. Eine Gefahr eines falschen Zuordnens der Lichtsignalanlage 4 zu einer jeweiligen Fahrspur 5 beziehungsweise einer jeweiligen Straße 3 von dem Fahrer oder einer elektronischen Recheneinrichtung des Kraftfahrzeugs 1 kann somit besonders gering gehalten werden. Die Lichtsignalanlage 4 steuert den Verkehr durch Ausgeben jeweiliger Lichtsignale mit unterschiedlichen Farben, wobei jeweiligen Farben eine einzuhaltende Verkehrsregel zugeordnet ist. Ein rotes Lichtsignal der Lichtsignalanlage 4 signalisiert, dass das Kraftfahrzeug 1 anzuhalten ist. Ein grünes Lichtsignal der Lichtsignalanlage 4 charakterisiert, dass das Kraftfahrzeug 1 die Kreuzung 2 passieren darf und somit durch die Kreuzung 2 hindurchfahren darf. Ein gelbes Lichtsignal der Lichtsignalanlage 4 symbolisiert, dass zwischen dem roten Lichtsignal und dem grünen Lichtsignal umgeschaltet wird.

Das Kraftfahrzeug 1 kann ein Fahrerassistenzsystem umfassen, welches dazu eingerichtet ist, einem Fahrer des Kraftfahrzeugs 1 beim Steuern des Kraftfahrzeugs 1 zu assistieren oder eine Funktion des Kraftfahrzeugs 1 teilautomatisiert zu steuern. Vorliegend umfasst das Kraftfahrzeug 1 eine Steuereinrichtung, welche dazu eingerichtet ist, das Kraftfahrzeug 1 längszusteuern. Weiterhin umfasst das Kraftfahrzeug 1 eine Erfassungseinrichtung, welche dazu eingerichtet ist, einen Zustand der Lichtsignalanlage 4 zu ermitteln, welche dafür vorgesehen ist, den Verkehr auf derjenigen Fahrspur 5 zu regeln, auf welcher sich das Kraftfahrzeug 1 befindet. Das Kraftfahrzeug 1 umfasst vorliegend weiterhin eine elektronische Recheneinrichtung, welche dazu eingerichtet ist, ein Qualitätsmaß für den mittels der Erfassungseinrichtung ermittelten Zustand der Lichtsignalanlage 4 zu erstellen, wodurch das Kraftfahrzeug 1 mittels der Steuereinrichtung in Abhängigkeit von dem erstellten Qualitätsmaß längsgesteuert oder nicht längsgesteuert wird.

Im Folgenden wird ein Verfahren zum Steuern des Kraftfahrzeugs 1 an der Lichtsignalanlage 4 im Zusammenhang mit dem in Fig. 2 gezeigten Verfahrensschema erläutert. Bei dem Verfahren ist es vorgesehen, dass in einem ersten Verfahrensschritt V1 ein Zustand der Lichtsignalanlage 4 mittels wenigstens einer Erfassungseinrichtung ermittelt wird. Insbesondere kann der Zustand der Lichtsignalanlage 4 im ersten Verfahrensschritt V1 mittels mehrerer Erfassungseinrichtungen voneinander unabhängig ermittelt werden. In einem zweiten Verfahrensschritt V2 des Verfahrens ist es vorgesehen, dass in Abhängigkeit von wenigstens einem Einflussfaktor für die Erfassung des Zustands der Lichtsignalanlage 4 mittels der Erfassungseinrichtung ein Qualitätsmaß für den erfassten Zustand festgelegt wird. Mit anderen Worten wird in dem zweiten Verfahrensschritt V2 das Qualitätsmaß für den erfassten Zustand der Lichtsignalanlage 4 erstellt, wobei bei der Erstellung des Qualitätsmaßes der wenigstens eine Einflussfaktor berücksichtigt wird. Als Einflussfaktor kann berücksichtigt werden, mit welcher Art von Erfassungseinrichtung - wie beispielsweise Kameraeinrichtung oder Kommunikationseinrichtung - der Zustand der Lichtsignalanlage 4 ermittelt worden ist. Darüber hinaus kann als Einflussfaktor berücksichtigt werden, mit wie vielen unterschiedlichen Erfassungseinrichtungen der Zustand der Lichtsignalanlage 4 erfasst worden ist und ob die jeweiligen mittels der mehreren Erfassungseinrichtungen erfassten Zustände der Lichtsignalanlage 4 miteinander übereinstimmen oder voneinander abweichen. Weiterhin kann als Einflussfaktor eine Fehlerwahrscheinlichkeit für die Art der verwendeten Erfassungseinrichtung beziehungsweise für die speziell verwendete Erfassungseinrichtung berücksichtigt werden. Je höher eine Zuverlässigkeit des Ergebnisses des Bestimmens des Zustands der Lichtsignalanlage 4 ist, beispielsweise aufgrund einer geringen Fehlerwahrscheinlichkeit bei dem Erfassen des Zustands durch die Erfassungseinrichtung beziehungsweise bei einer hohen Übereinstimmungsrate des von mehreren Erfassungseinrichtungen ermittelten Zustands der Lichtsignalanlage 4, desto höher wird das Qualitätsmaß festgelegt.

Weiterhin kann als Einflussfaktor eine aktuelle, nicht verkehrsbedingte Umgebungsbedingung wie das Wetter berücksichtigt werden. Weiterhin alternativ oder zusätzlich kann das Qualitätsmaß in Abhängigkeit von einem Gütemaß für die Erkennung des Zustands der Lichtsignalanlage ermittelt werden. Dieses Gütemaß charakterisiert für eine definierte Lichtsignalanlage 4, wie hoch der Anteil an Ereignissen ist, bei welchen mittels jeweiliger Kraftfahrzeuge der Zustand dieser Lichtsignalanlage 4 richtig ermittelt worden ist im Vergleich zu einer gesamten Anzahl an Ereignissen, bei welchen der Zustand der Lichtsignalanlage 4 von jeweiligen Kraftfahrzeugen 1 ermittelt worden ist.

Das Qualitätsmaß kann zusätzlich in Abhängigkeit von einer Komplexität einer durch die Lichtsignalanlage 4 gesteuerten Verkehrsregelsituation ermittelt werden. Die Komplexität der Verkehrsregelsituation hängt von einer Anzahl an Fahrspuren 5 jeweiliger an der Verkehrsregelsituation beteiligter Straßen 3 sowie einem Verlauf der jeweiligen Fahrspuren 5 ab. Weiterhin hängt die Komplexität der Verkehrsregelsituation von einer Anzahl an die Verkehrsregelsituation steuernden Lichtsignalanlagen 4 sowie einer geometrischen Zuordnung jeweiliger Lichtsignalanlagen 4 zu jeweiligen Fahrspuren 5 ab. Bei dem Verfahren ist es weiterhin vorgesehen, dass bei einem hohen ermittelten Qualitätsmaß das Verfahren dem Pfeil zu dem dritten Verfahrensschritt V3a folgt, bei einem ermittelten mittleren Qualitätsmaß das Verfahren dem Pfeil zum dritten Verfahrensschritt V3b folgt und bei einem niedrigen ermittelten Qualitätsmaß das Verfahren dem Pfeil zu dem dritten Verfahrensschritt V3c folgt. Hierbei sind die Bezeichnungen hoch, mittel und niedrig lediglich als Relation untereinander zu verstehen.

In dem dritten Verfahrensschritt V3a und somit bei dem hohen ermittelten Qualitätsmaß ist es vorgesehen, dass das Kraftfahrzeug 1 mittels der Steuereinrichtung entsprechend dem ermittelten Zustand der Lichtsignalanlage 4 längsgesteuert wird. Bei dem dritten Verfahrensschritt V3c und somit bei dem niedrigen ermittelten Qualitätsmaß ist es vorgesehen, dass eine Übernahmeaufforderung an den Fahrzeuginsassen ausgegeben wird, insbesondere im Kraftfahrzeug. Diese Übernahmeaufforderung charakterisiert, dass der Fahrzeuginsasse die Längssteuerung des Kraftfahrzeugs 1 übernehmen soll. Hierbei kann gemeinsam mit dem Ausgeben der Übernahmeaufforderung eine aktive Längssteuerung des Kraftfahrzeugs, bei welcher das Kraftfahrzeug 1 mittels der Steuereinrichtung automatisiert längsgesteuert wird, deaktiviert werden.

Mit anderen Worten übernimmt die Steuereinrichtung das Längssteuern des Kraftfahrzeugs 1, wenn im Rahmen des Erstellens des Qualitätsmaßes festgestellt worden ist, dass der Zustand der Lichtsignalanlage 4 für die gegebene Komplexität der Verkehrsregelsituation mit ausreichender Zuverlässigkeit richtig ermittelt worden ist. Wird festgestellt, dass der Zustand der Lichtsignalanlage 4 für die gegebene Komplexität der Verkehrsregelsituation nicht mit ausreichender Zuverlässigkeit richtig ermittelt worden konnte und somit das niedrige Qualitätsmaß festgestellt worden ist, dann wird die Steuerung des Kraftfahrzeugs 1 über die Übernahmeaufforderung wieder an den Fahrer des Kraftfahrzeugs übergeben.

Wird im Rahmen des zweiten Verfahrensschritts V2 das mittlere Qualitätsmaß ermittelt, welches einen Wert zwischen dem hohen Qualitätsmaß und dem niedrigen Qualitätsmaß aufweist, dann wird in dem dritten Verfahrensschritt V3b eine Aufforderung zur Eingabe einer Bestätigung für einen Fahrzeuginsassen ausgegeben. Der Fahrzeuginsasse wird mittels der Aufforderung gebeten, den ermittelten Zustand der Lichtsignalanlage 4 als richtig zu bestätigen oder als falsch abzulehnen. Es erfolgt somit in dem dritten Verfahrensschritt V3b eine Rückversicherung hinsichtlich des ermittelten Zustands der Lichtsignalanlage 4 bei dem Fahrzeuginsassen. Je nach Rückmeldung des Fahrzeuginsassen auf die ausgegebene Aufforderung wird von dem Verfahren in dem Verfahrensschema dem Pfeil zum vierten Verfahrensschritt V4a oder zum vierten Verfahrensschritt V4b gefolgt. Wird eine die Bestätigung charakterisierende Benutzereingabe empfangen, dann folgt das Verfahren dem Pfeil zum vierten Verfahrensschritt V4a. Wird hingegen eine die Ablehnung charakterisierende weitere Benutzereingabe des Fahrzeuginsassen empfangen, dann folgt das Verfahren dem Pfeil zum vierten Verfahrensschritt V4b. Erfolgt in Reaktion auf die Aufforderung zur Eingabe der Bestätigung keine die Bestätigung oder die Ablehnung charakterisierende Benutzereingabe dann folgt das Verfahren ebenfalls dem Pfeil zum vierten Verfahrensschritt V4b. Im vierten Verfahrensschritt V4a ist es vorgesehen, dass das Kraftfahrzeug mittels der Steuereinrichtung entsprechend dem ermittelten Zustand der Lichtsignalanlage 4 längsgesteuert wird. In dem vierten Verfahrensschritt V4b ist es vorgesehen, dass die Übernahmeaufforderung an den Fahrzeuginsassen ausgegeben wird, welche charakterisiert, dass der Fahrzeuginsasse die Längssteuerung des Kraftfahrzeugs 1 übernehmen soll.

Im Folgenden werden elf konkrete Beispiele erläutert. Im ersten Beispiel wird als Lichtsignalfarbe grün mit einem hohen Qualitätsmaß ermittelt. Infolgedessen kann eine Infoanzeige, welche den ermittelten grünen Zustand der Lichtsignalanlage 4 charakterisiert, über eine Mensch-Maschine-Schnittstelle (HMI), insbesondere eine Bildschirmeinrichtung, an den Fahrzeuginsassen ausgegeben werden. Weiterhin ist es vorgesehen, dass die Längsregelung des Kraftfahrzeugs 1 mittels der Steuereinrichtung erfolgt, wobei die Steuereinrichtung dafür sorgt, dass das Kraftfahrzeug 1 weiterfährt. In dem zweiten Beispiel wird als Lichtsignalfarbe grün mit einem mittleren Qualitätsmaß ermittelt. Infolgedessen wird an den Fahrzeuginsassen die Aufforderung über das HMI ausgegeben. Es erfolgt eine Bestätigung des ermittelten Zustands der Lichtsignalanlage 4 durch den Fahrzeuginsassen. Infolgedessen steuert die Steuereinrichtung das Kraftfahrzeug 1 derart, dass das Kraftfahrzeug 1 weiterfährt. Bei dem zweiten Beispiel ist das mittlere Qualitätsmaß festgestellt worden. Hierbei kann die Straßengeometrie aus erkannten Fahrspuren 5 geschätzt worden sein, eine Lichtsignalanlage-Fahrspur-Zuordnung aus einem die Umgebung des Kraftfahrzeugs 1 darstellenden Umgebungsbild unter Hinzunahme von Schwarmdaten geschätzt sein. Infolgedessen kann die Aufforderungsanzeige in Form eines Popups an den Fahrzeuginsassen ausgegeben werden. Bis zum Empfangen der Fahrerbestätigung, welche besagt, dass die Kreuzung aufgrund der das grüne Licht aussendenden Lichtsignalanlage 4 überfahren werden darf, wird das Kraftfahrzeug 1 mit verringerter Verzögerung abgebremst.

Schwarmdaten können von einem und idealerweise sehr vielen Fahrzeugen beim Überfahren eines Streckenabschnitts aufgenommen beziehungsweise gesammelt worden sein und wenigstens eine mittels einer Kamera aufgenommene, also abgebildete oder automatisch erkannte beziehungsweise detektierte Fahrbahnmarkierung und/oder Fahrbahngrenze enthalten. Die Schwarmdaten können als aufgenommene Kamerabilder und/oder anhand dieser ermittelte Angaben von Objekten oder Bereichen sein oder umfassen. Weiterhin können die Schwarmdaten auch Geschwindigkeitsprofile entlang einer Strecke oder weitere Fahrzeugeigenschaften wie beispielsweise eine Fensterposition enthalten. Die Schwarmdaten können beispielsweise in einem zentralen Server, also etwa einem Cloudserver oder einem Backend, gesammelt und von diesem durch das Kraftfahrzeug abgerufen werden. Dies kann beispielsweise basierend auf einer jeweils aktuellen Position und/oder einer eingestellten Navigationsroute des Kraftfahrzeugs bedarfsgerecht erfolgen.

In dem dritten Beispiel ist es vorgesehen, dass als Lichtsignalfarbe grün detektiert wird und hierfür ein mittleres Qualitätsmaß festgestellt wird. Infolgedessen wird über das HMI die Aufforderung angegeben. Die Bestätigung durch den Fahrzeuginsassen erfolgt nicht beziehungsweise es wird die die Ablehnung charakterisierende weitere Benutzereingabe empfangen. Infolgedessen wird die Übernahmeaufforderung an den Fahrzeuginsassen ausgegeben und die Längsführung des Kraftfahrzeugs 1 passiv geschaltet.

In dem vierten Beispiel wird als Lichtsignalfarbe rot ermittelt und hierfür ein hohes Qualitätsmaß festgestellt. Infolgedessen wird mittels des HMI eine Infoanzeige ausgegeben und das Kraftfahrzeug mittels der Steuereinrichtung angehalten. In dem ersten Beispiel und im vierten Beispiel ist das hohe Qualitätsmaß festgestellt worden beispielsweise aufgrund einer Straßengeometrie, bei welcher die Lichtsignalanlage-Fahrspur-Zuordnung sowie eine eigene Fahrspur des Kraftfahrzeugs 1 bekannt sind. Infolgedessen wird die Infoanzeige in Form eines Popups über das HMI ausgegeben und das Kraftfahrzeug 1 bei ermitteltem grünem Lichtsignal ohne Bestätigung über die Kreuzung 2 mittels der Steuereinrichtung gesteuert oder bei dem roten ermittelten Lichtsignal an einer Haltelinie der Kreuzung 2 mittels der Steuereinrichtung angehalten.

In dem fünften Beispiel wird als Lichtsignalfarbe rot ermittelt und hierfür ein mittleres Qualitätsmaß festgestellt. Infolgedessen wird die Aufforderung an den Fahrzeuginsassen ausgegeben. Es erfolgt die Bestätigung durch den Fahrzeuginsassen. Infolgedessen wird das Kraftfahrzeug 1 mittels der Steuereinrichtung angehalten. In dem sechsten Beispiel wird als Lichtsignalfarbe rot ermittelt und ein mittleres Qualitätsmaß festgestellt. Infolgedessen wird die Aufforderung über das HMI ausgegeben. Es erfolgt keine Bestätigung durch den Fahrzeuginsassen beziehungsweise es wird die die Ablehnung charakterisierende weitere Benutzereingabe empfangen. Infolgedessen wird die Übernahmeaufforderung ausgegeben und die Längsführung des Kraftfahrzeugs 1 passiv geschaltet.

In dem siebten Beispiel wird die Lichtsignalfarbe nicht erkannt oder der erkannten Lichtsignalfarbe lediglich das geringe Qualitätsmaß zugeordnet. Infolgedessen wird dem Fahrzeuginsassen über das HMI die Übernahmeaufforderung ausgegeben und die Längsführung des Kraftfahrzeugs 1 passiv geschaltet. Bei dem siebten Beispiel kann dem System für einen erkannten Zustand der Lichtsignalanlage 4 lediglich die Information der Kamera vorliegen. Werden dabei mehrere Fahrspuren oder mehrere Lichtsignalanlagen 4 erkannt, dann kann keine sichere Handlung abgeleitet werden. Infolgedessen wird das niedrige Qualitätsmaß festgelegt. Die Übernahmeaufforderung kann in Form eines Popups mit dem Text "Bitte Regelung auf Ampel übernehmen" ausgegeben werden. Alternativ kann je nach Anzeigekonzept eine Reaktion der Steuereinrichtung auf den ermittelten Zustand der Lichtsignalanlage 4 unterbleiben. In dem achten Beispiel wird als Lichtsignalfarbe gelb ermittelt und hierfür ein hohes Qualitätsmaß festgestellt. In Abhängigkeit von der vorausliegenden Lichtsignalfarbe und einem vorausliegenden Qualitätsmaß wird ein Folgezustand abgeschätzt und das Kraftfahrzeug 1 bereitet sich auf den abgeschätzten Folgezustand der Lichtsignalanlage 4 vor. Bei dem Übergang von einem grünen Lichtsignal auf ein rotes Lichtsignal, wobei für das grüne Lichtsignal vorher ein hohes Qualitätsmaß ermittelt worden ist und nun für das gelbe Lichtsignal ein hohes Qualitätsmaß ermittelt worden ist, folgt die Infoanzeige im HMI und ein Anhaltevorgang des Kraftfahrzeugs 1 wird mittels der Steuereinrichtung gestartet. Bei dem Übergang von einem roten Lichtsignal auf ein grünes Lichtsignal, wobei dem roten Lichtsignal vorher ein hohes Qualitätsmaß zugeordnet worden ist und nun dem gelben Lichtsignal ein hohes Qualitätsmaß zugeordnet worden ist, wird die Infoanzeige über das HMI ausgegeben und eine Verzögerung des Kraftfahrzeugs mittels der Steuereinrichtung reduziert. Eine Weiterfahrt des Kraftfahrzeugs 1 erfolgt erst, wenn anschließend das grüne Lichtsignal mit einem hohen zugeordneten Qualitätsmaß erkannt worden ist oder wenn das grüne Lichtsignal erkannt worden ist und bei Ermitteln des dazugehörigen mittleren Qualitätsmaßes die Bestätigung von dem Fahrzeuginsassen empfangen worden ist. Anders als bei einem Übergang zu rot wird beim Übergang zu grün sicherheitshalber so lange verzögert, bis das grüne Lichtsignal sicher erkannt worden ist beziehungsweise die Bestätigung durch den Fahrzeuginsassen vorliegt. Die Längsregelung des Kraftfahrzeugs erfolgt somit in diesem achten Beispiel in Abhängigkeit von der vorausliegenden oder vorhergehenden Lichtsignalfarbe sowie dem vorhergehenden ermittelten Qualitätsmaß.

Bei dem neunten Beispiel wird als Lichtsignalfarbe gelb erkannt und ein mittleres Qualitätsmaß festgestellt. Infolgedessen kann für höchstens ein vorgegebenes Zeitintervall gewartet werden und nach Ablauf dieses vorgegebenen Zeitintervalls die Übernahmeaufforderung über das HMI ausgegeben werden. Bei Ablauf des vorgegebenen Zeitintervalls kann die Längsführung des Kraftfahrzeugs 1 passiv geschaltet werden. Bei dem zehnten Beispiel und dem elften Beispiel ist es vorgesehen, dass der Zustand der Lichtsignalanlage 4 sowohl mittels einer Kameraeinrichtung als auch anhand von über eine Car-to-X-Kommunikation empfangenen Daten ermittelt wird, insbesondere über eine Car-to-Infrastructure-Kommunikation. Bei dem zehnten Beispiel ist es vorgesehen, dass als Lichtsignalfarbe grün ermittelt wird, wobei das hohe Qualitätsmaß festgestellt wird. Infolgedessen wird die Infoanzeige über das HMI ausgegeben und das Kraftfahrzeug 1 mittels der Steuereinrichtung derart längsgesteuert, dass dieses weiterfährt. Bei dem elften Beispiel ist es vorgesehen, dass als Lichtsignalfarbe rot ermittelt wird und hierfür ein hohes Qualitätsmaß festgestellt wird. Infolgedessen wird über das HMI die Infoanzeige ausgebeben und mittels der Steuereinrichtung erfolgt eine prädiktive Verzögerung und Idealampelüberfahrt, sobald die Lichtsignalanlage 4 von rot auf grün umschaltet. Bei dem elften Beispiel ist das hohe Qualitätsmaß ermittelt worden, welches einen noch höheren Wert aufweisen kann als das in dem ersten Beispiel und dem vierten Beispiel ermittelte Qualitätsmaß. Bei dem elften Beispiel können eine Straßengeometrie der Kreuzung 2, eine Lichtsignalanlage-Fahrspur-Zuordnung sowie eine eigene Fahrspur 5 des Kraftfahrzeugs 1 bekannt sein und zusätzlich Ampelschaltzeiten über die Fahrzeug-zu-Infrastruktur-Kommunikation empfangen werden. Infolgedessen kann die Infoanzeige als Popup über das HMI ausgegeben werden und das Kraftfahrzeug 1 mittels der Steuereinrichtung vor der roten Ampel ohne Bestätigung leicht verzögert werden, um passend zur Grünphase die Kreuzung 2 zu überqueren.

Bei dem Verfahren ist es vorgesehen, dass in Abhängigkeit von einer erkannten Anzahl an Lichtsignalanlagen 4 beziehungsweise Fahrspuren 5 beziehungsweise dem Wetter beziehungsweise Regen beziehungsweise Tageszeit beziehungsweise vorhandenen Sensorquellen ein kumuliertes Qualitätsmaß ermittelt wird. Dieses Qualitätsmaß ist weiterhin abhängig von einer Komplexität der Kreuzung 2. Je nach ermittelten Qualitätsmaß erfolgt eine an das jeweilige Qualitätsmaß angepasste Reaktion des Fahrerassistenzsystems des Kraftfahrzeugs 1, insbesondere hinsichtlich Ausgaben des HMI sowie einer Fahrzeugreaktion, um dem Fahrzeuginsassen ein bestmögliches und vertrauenswürdiges System anbieten zu können.

Dem beschriebenen Verfahren liegt die Erkenntnis zugrunde, dass heutige in Entwicklung und für Serie geplante Funktionen zur Erkennung der Farbe der Lichtsignalanlage 4 idealerweise Ampelanlagen von einfachen bis hin zu sehr komplexen Kreuzungsgeometrien und Lichtsignalanordnungen neben und über der Kreuzung 2 beherrschen sollen. Soll ein Level-2-System und somit ein Level-2-fähiges Kraftfahrzeug 1 auf die Ampel reagieren, insbesondere indem bei rot angehalten wird und bei grün weitergefahren wird, dann besteht die Gefahr, dass der Fahrer sich vollständig auf das System verlässt, obwohl in Abhängigkeit von der Komplexität die Situation gegebenenfalls nicht sicher beherrscht werden kann. Dem Fahrer sind dabei oft die Gründe für eine gute beziehungsweise schlechtere Sensorgüte nicht bekannt beziehungsweise nicht transparent. So ist es technisch deutlich einfacher, eine Ampel auf gerader Strecke mit nur einer Fahrspur dieser Fahrspur zuzuordnen, als in einem komplexen Szenario mit mehreren Fahrspuren beziehungsweise Abbiegerspuren und Kurven vor der Ampel. Hier ist es deutlich schwieriger, die erkannten Ampeln den richtigen Fahrspuren 5 zuzuordnen. Die Sensorgüte kann oft im Vorfeld oder live bewertet werden, sodass eine Assistenzfunktion des Fahrerassistenzsystems in unterschiedlichen Ausprägungen dem Fahrer angeboten werden kann. Dies kann rein visuell durch eine HMI-Anzeige erfolgen oder durch unterschiedlich ausgeprägte Reaktionen des Kraftfahrzeugs 1, wie eine zusätzlich notwendige Fahrerbestätigung. Im Folgenden wird eine mögliche feingliedrige Abstufung für die Sensorgüte in Abhängigkeit von den Sensorquellen von bestmöglich (A) bis minimal (F) beschrieben:
A: Car-to-X-Kommunikation, beispielsweise über WLAN oder 5G, wobei über die Car-to-X-Kommunikation ein aktueller Status der Ampel, eine verbleibende Zeitdauer einer Ampelphase sowie eine Ampelgeometrie übermittelt werden können; Kamera; digitale Karte; Schwarmdaten. Optional kann zusätzlich noch eine Berücksichtigung von Krümmung beziehungsweise Höhenänderung der Fahrspur 5 vor der Ampel berücksichtigt werden. Je gerader die Fahrspur 5 ist, desto besser ist die Sicht der Kamera des Kraftfahrzeugs 1.
B: Car-to-X-Kommunikation, beispielsweise über WLAN oder 5G, wobei der aktuelle Status der Ampel sowie die Ampelgeometrie über die Car-to-X-Kommunikation übertragen wird; Kamera; digitale Karte; Schwarmdaten.
C: Car-to-X-Kommunikation, beispielsweise über WLAN oder 5G, wobei nur der aktuelle Status der Ampel übertragen wird; Kamera; digitale Karte; Schwarmdaten.
D: Kamera, gegebenenfalls mit Gütemaß aus Schwarmdaten für ein Erkennen der Lichtsignalanlage; Schwarmdaten; digitale Karte, welche beispielsweise prädiktive Streckendaten umfassen kann.
E: Kamera und digitale Karte, welche beispielsweise prädiktive Streckendaten umfassen kann.
F: Kamera.

Liegt dem System für eine erkannte Ampel nur die Information aus der Kamera vor und wird nur eine Fahrspur 5 und nur eine Ampel durch die Kamera erkannt, kann trotzdem eine sichere Information hinsichtlich des Zustands der Ampel gewonnen werden. Die Fahrerassistenzfunktion kann in vollem Umfang dem Fahrer angeboten werden. Das bedeutet, dass mittels der Steuereinrichtung das Kraftfahrzeug längsgesteuert wird. Liegt dem System für eine erkannte Ampel nur die Information aus der Kamera vor und werden mehrere Fahrspuren 5 oder mehrere Ampeln erkannt, kann keine sichere Handlung abgeleitet werden.

In einer mittleren Informationsstufe kann das Fahrerassistenzsystem zusätzlich eine digitale Karte und gegebenenfalls Schwarmdaten nutzen, um damit eine geeignete Lichtsignalanlage-Fahrspur-Zuordnung zu erreichen. So können beispielsweise bei Vorhandensein einer Abbiegespur und zwei Lichtsignalanlagen 4 die Lichtsignalanlagen 4 den Fahrspuren 5 zugeordnet werden und eine sichere Handlung in Abhängigkeit von einer Fahrspur 5, auf welcher sich das Kraftfahrzeug 1 befindet, abgeleitet werden. Bei komplexen Kreuzungen mit mehr Lichtsignalanlagen 4 als Fahrspuren 5 oder weniger Lichtsignalanlagen 4 als Fahrspuren 5 ist die Zuordnung der Lichtsignalanlagen 4 zu den jeweiligen Fahrspuren 5 nicht mehr trivial über Kamera und digitale Karte möglich. In diesem Fall kann eine Funktionsausbringung in der Form sein, dass der Fahrer die Weiterfahrt über die durch die Lichtsignalanlage 4 geregelte Kreuzung 2 bestätigen muss. Ohne Bestätigung würde das Kraftfahrzeug 1 verzögert werden.

In bester Ausprägung empfängt das Kraftfahrzeug 1 die Kreuzungsgeometrie der Kreuzung 2 über die Car-to-X-Kommunikation und ebenfalls den Zustand der Lichtsignalanlage 4 über die Car-to-X-Kommunikation. Zusätzlich kann über die Car-to-X-Kommunikation sogar die verbleibende Zeit der derzeitigen Ampelphase empfangen werden. Mit diesen Informationen ist auf beliebig komplexen Kreuzungen 2 eine sichere Handlung des Fahrerassistenzsystems möglich. Es wird somit in diesem Fall das höchste Qualitätsmaß ermittelt und das Kraftfahrzeug 1 mittels der Steuereinrichtung längsgesteuert. Für unterschiedlich hohe ermittelte Qualitätsmaße ist somit eine unterschiedliche Ausprägung der Fahrerassistenzfunktion des Fahrerassistenzsystems, insbesondere der Längssteuerung des Kraftfahrzeugs 1 durch die Steuereinrichtung, vorgesehen. Durch eine entsprechende Anzeige im HMI kann dem Fahrer die Abstufung des Funktionsumfangs der Fahrerassistenzfunktion dargestellt werden. Das Qualitätsmaß kann insbesondere in Abhängigkeit von von einem Regensensor des Kraftfahrzeugs 1 empfangenen Daten und/oder in Abhängigkeit von ermittelten Spurmarkierungen und/oder in Abhängigkeit von ermittelten Lichtsignalfarben und/oder in Abhängigkeit von Kartendaten, wie insbesondere prädiktiven Streckendaten und/oder in Abhängigkeit von einer Uhrzeit und/oder in Abhängigkeit von einer Fahrzeuggeschwindigkeit des Kraftfahrzeugs 1 und/oder in Abhängigkeit von einer Tageszeit und/oder in Abhängigkeit von von der Infrastruktur, insbesondere der Lichtsignalanlage 4, empfangenen Ampelinformationen bestimmt werden. In Abhängigkeit von dem bestimmten Qualitätsmaß wird eine Reaktion des Kraftfahrzeugs 1 ausgewählt. Als Reaktion des Kraftfahrzeugs kann das HMI des Kraftfahrzeugs 1 angesteuert werden. Hierdurch kann über das HMI die Infoanzeige und/oder die Aufforderung zur Bestätigung des ermittelten Zustands ausgegeben werden. Als Reaktion kann alternativ oder zusätzlich das Kraftfahrzeug längsgesteuert werden, insbesondere mittels der Steuereinrichtung. Infolge der Längssteuerung des Kraftfahrzeugs 1 verzögert dieses oder hält dieses an oder fährt dieses weiter. Die Lichtsignalfarbe kann, soweit vorhanden, inklusive eines Gütemaßes für die Lichtsignalanlage 4 bei der Bestimmung des Qualitätsmaßes berücksichtigt werden. Das Qualitätsmaß ist kumuliert aus allen Sensorquellen, die gerade zur Verfügung stehen. Das Gütemaß beschreibt eine reine Güte der Kameraerkennung des Zustands der Lichtsignalanlage 4.

Das Kraftfahrzeug 1 kann beispielsweise ein System zur adaptiven Geschwindigkeitsregelung umfassen. Dieses System, welches auch als Adaptive Cruise Control (ACC) bezeichnet werden kann, kann Ampeln unterschiedlich gut erkennen und darauf reagieren. Die Reaktion des Kraftfahrzeugs 1 "weiterfahren" wird nur bei einem hohen Qualitätsmaß für den ermittelten Zustand der Lichtsignalanlage 4 durchgeführt, in allen anderen Fällen ist eine andere Reaktion des Kraftfahrzeugs 1 notwendig.

Es kann ein simples Verfahren ohne Abfrage der Fahrerbestätigung oder ein komplexes Verfahren mit Abfrage der Fahrerbestätigung genutzt werden. Bei dem simplen Verfahren erfolgt die Weiterfahrt des Kraftfahrzeugs 1 mittels der das Kraftfahrzeug 1 längssteuernden Steuereinrichtung lediglich dann, wenn als Zustand der Lichtsignalanlage 4 ermittelt worden ist, dass die Lichtsignalanlage 4 ein grünes Lichtsignal aussendet und hierfür ein hohes Qualitätsmaß bestimmt worden ist. Ist kein hohes Qualitätsmaß bestimmt worden oder als Signalfarbe der Lichtsignalanlage 4 eine andere Farbe als grün ermittelt worden, dann erfolgt ein Anhalten beziehungsweise Verzögern des Kraftfahrzeugs 1 und ein Beenden der ACC-Funktion sowie ein Ausgeben einer Übernahmeaufforderung an den Fahrzeuginsassen. Bei dem komplexen Verfahren erfolgt auch dann ein Weiterfahren des Kraftfahrzeugs längsgeregelt durch die Steuereinrichtung, wenn bei einem bestimmten mittleren Qualitätsmaß von dem Fahrer die Bestätigung empfangen worden ist, welche charakterisiert, dass der Zustand der Lichtsignalanlage 4 richtig ermittelt worden ist und als Zustand der Lichtsignalanlage 4 ermittelt worden ist, dass die Lichtsignalanlage 4 ein grünes Lichtsignal aussendet.

Insgesamt zeigt die Erfindung, wie ein Verfahren zur Reaktion auf Lichtsignalanlagen 4 unter Berücksichtigung eines Qualitätsmaßes geschaffen werden kann.

### Bezugszeichenliste

- 1: Kraftfahrzeug
- 2: Kreuzung
- 3: Straße
- 4: Lichtsignalanlage
- 5: Fahrspur
- V1 bis V4b: jeweilige Verfahrensschritte

## Patentansprüche

1. Verfahren zum Steuern eines Kraftfahrzeugs (1) an einer Lichtsignalanlage (4), bei welchem
- ein Zustand der Lichtsignalanlage (4) mittels wenigstens einer Erfassungseinrichtung ermittelt wird (V1),
- in Abhängigkeit von wenigstens einem Einflussfaktor für die Erfassung des Zustands der Lichtsignalanlage (4) ein Qualitätsmaß für den erfassten Zustand festgelegt wird (V2),
- bei einem hohen ermittelten Qualitätsmaß ein Längssteuern des Kraftfahrzeugs (1) mittels einer Steuereinrichtung entsprechend dem ermittelten Zustand der Lichtsignalanlage (4) erfolgt (V3a);
- bei einem mittleren ermittelten Qualitätsmaß ein Ausgeben einer Aufforderung zur Eingabe einer Bestätigung für einen Fahrzeuginsassen erfolgt, wobei der Fahrzeuginsasse mittels der Aufforderung gebeten wird, den ermittelten Zustand der Lichtsignalanlage (4) als richtig zu bestätigen oder als falsch abzulehnen (V3b), wobei bei Empfangen einer die Bestätigung charakterisierenden Benutzereingabe das Kraftfahrzeug (1) entsprechend dem ermittelten Zustand der Lichtsignalanlage (4) mittels der Steuereinrichtung längsgesteuert wird (V4a),
**dadurch gekennzeichnet, dass**
- bei Empfangen einer die Ablehnung charakterisierenden weiteren Benutzereingabe eine Übernahmeaufforderung an den Fahrzeuginsassen ausgegeben wird, welche charakterisiert, dass der Fahrzeuginsasse die Längssteuerung des Kraftfahrzeugs (1) übernehmen soll (V4b), und dass
- bei einem niedrigen ermittelten Qualitätsmaß ein Ausgeben der Übernahmeaufforderung an den Fahrzeuginsassen erfolgt (V3c).

2. Verfahren nach Anspruch 1, wobei gemeinsam mit dem Ausgeben der Übernahmeaufforderung eine aktive Längssteuerung des Kraftfahrzeugs (1) mittels der Steuereinrichtung deaktiviert wird.

3. Verfahren nach Anspruch 1 oder 2, wobei das Qualitätsmaß zusätzlich in Abhängigkeit von einer Komplexität einer durch die Lichtsignalanlage (4) gesteuerten Verkehrsregelsituation ermittelt wird.

4. Verfahren nach Anspruch 3, wobei für das Ermitteln der Verkehrsregelsituation wenigstens einer der folgenden Faktoren berücksichtigt wird:
- Anzahl Fahrspuren (5)
- Verlauf der jeweiligen Fahrspuren (5)
- Anzahl an Lichtsignalanlagen (4)
- Geometrische Zuordnung jeweiliger Lichtsignalanlagen (4) zu jeweiligen Fahrspuren (5).

5. Verfahren nach einem der vorhergehenden Ansprüche, wobei als Einflussfaktor eine Art der wenigstens einen Erfassungseinrichtung berücksichtigt wird.

6. Verfahren nach einem der vorhergehenden Ansprüche, wobei als Einflussfaktor eine Anzahl an Erfassungseinrichtungen berücksichtigt wird.

7. Verfahren nach einem der vorhergehenden Ansprüche, wobei als Einflussfaktor eine aktuelle, nicht verkehrsbedingte Umgebungsbedingung berücksichtigt wird.

8. Verfahren nach einem der vorhergehenden Ansprüche, wobei das Qualitätsmaß in Abhängigkeit von einem Gütemaß für die Erkennung des Zustands der Lichtsignalanlage (4) ermittelt wird.

9. Elektronische Recheneinrichtung für ein Kraftfahrzeug, welche dazu eingerichtet ist,
- einen von einer Erfassungseinrichtung ermittelten Zustand einer Lichtsignalanlage (4) zu empfangen,
- in Abhängigkeit von einem Erfassungsvorgang der Lichtsignalanlage (4) mittels der Erfassungseinrichtung ein Qualitätsmaß für den erfassten Zustand festzulegen,
- bei einem hohen ermittelten Qualitätsmaß ein Längssteuern des Kraftfahrzeugs (1) mittels einer Steuereinrichtung entsprechend dem ermittelten Zustand der Lichtsignalanlage (4) auszulösen,
- bei einem mittleren ermittelten Qualitätsmaß ein Ausgeben einer Aufforderung zur Eingabe einer Bestätigung für einen Fahrzeuginsassen auszulösen, wobei der Fahrzeuginsasse mittels der Aufforderung gebeten wird, den ermittelten Zustand der Lichtsignalanlage (4) als richtig zu bestätigen oder als falsch abzulehnen, und dabei bei Empfangen einer die Bestätigung charakterisierenden Benutzereingabe ein Längssteuern des Kraftfahrzeugs (1) mittels der Steuereinrichtung entsprechend dem ermittelten Zustand der Lichtsignalanlage (4) auszulösen,
**dadurch gekennzeichnet, dass**
die elektronische Recheneinheit weiter dazu eingerichtet ist,
- bei Empfangen einer die Ablehnung charakterisierenden weiteren Benutzereingabe ein Ausgeben einer Übernahmeaufforderung an den Fahrzeuginsassen auszulösen, welche charakterisiert, dass der Fahrzeuginsasse die Längssteuerung des Kraftfahrzeugs (1) übernehmen soll, und dazu,
- bei einem niedrigen ermittelten Qualitätsmaß ein Ausgeben der Übernahmeaufforderung an den Fahrzeuginsassen auszulösen.

10. Kraftfahrzeug (1), mit einer elektronischen Recheneinrichtung nach Anspruch 9, wenigstens einer Erfassungseinrichtung, welche dazu eingerichtet ist, einen Zustand einer Lichtsignalanlage (4) zu ermitteln, und einer Steuereinrichtung, welche dazu eingerichtet ist, das Kraftfahrzeug (1) in Abhängigkeit von dem ermittelten Qualitätsmaß längszusteuern.

## Claims

1. Method for controlling a motor vehicle (1) in a traffic light system (4), in which
- a state of the traffic light system (4) is determined (V1) by means of at least one detection device,
- depending on at least one influencing factor for the detection of the state of the traffic light system (4), a quality measure for the detected state is defined (V2),
- if a high quality measure is determined, longitudinal control of the motor vehicle (1) is carried out (V3a) by means of a control device in accordance with the determined state of the traffic light system (4);
- if a medium quality measure is determined, a request is issued to a vehicle occupant to input confirmation, the vehicle occupant being asked, by means of the request, to confirm or reject (V3b) the determined state of the traffic light system (4) as correct or incorrect, upon receipt of a user input characterizing the confirmation, the motor vehicle (1) being longitudinally controlled (V4a) by means of the control device in accordance with the determined state of the traffic light system (4),
**characterized in that**
- upon receipt of a further user input characterizing the rejection, a takeover request is issued to the vehicle occupant, which takeover request characterizes that the vehicle occupant is to take over (V4b) the longitudinal control of the motor vehicle (1), and **in that**
- if a low quality measure is determined, the takeover request is issued (V3c) to the vehicle occupant.

2. Method according to claim 1, wherein, together with the issuance of the takeover request, an active longitudinal control of the motor vehicle (1) is deactivated by means of the control device.

3. Method according to claim 1 or 2, wherein the quality measure is additionally determined depending on the complexity of a traffic control situation controlled by the traffic light system (4).

4. Method according to claim 3, wherein at least one of the following factors is taken into account to determine the traffic control situation:
- number of lanes (5)
- course of the respective lanes (5)
- number of traffic light systems (4)
- geometric assignment of respective traffic light systems (4) to respective lanes (5).

5. Method according to any of the preceding claims, wherein a type of the at least one detection device is taken into account as an influencing factor.

6. Method according to any of the preceding claims, wherein a number of detection devices is taken into account as an influencing factor.

7. Method according to any of the preceding claims, wherein a current, nontraffic-related environmental state is taken into account as an influencing factor.

8. Method according to any of the preceding claims, wherein the quality measure is determined depending on a measure of quality for the detection of the state of the traffic light system (4).

9. Electronic computing device for a motor vehicle, which is configured
- to receive a state of a traffic light system (4) determined by a detection device,
- to define a quality measure for the detected state by means of the detection device depending on a detection process of the traffic light system (4),
- to trigger, if a high quality measure is determined, longitudinal control of the motor vehicle (1) by means of a control device in accordance with the determined state of the traffic light system (4),
- to issue, if a medium quality measure is determined, a request to a vehicle occupant to input confirmation, the vehicle occupant being asked, by means of the request, to confirm or reject the determined state of the traffic light system (4) as correct or incorrect, and to trigger, upon receipt of a user input characterizing the confirmation, longitudinal control of the motor vehicle (1) by means of a control device in accordance with the determined state of the traffic light system (4),
**characterized in that**
the electronic computing unit is further configured
- to issue, upon receipt of a further user input characterizing the rejection, a takeover request to the vehicle occupant, which takeover request characterizes that the vehicle occupant is to take over the longitudinal control of the motor vehicle (1), and
- to issue, if a low quality measure is determined, the takeover request to the vehicle occupant.

10. Motor vehicle (1), comprising an electronic computing device according to claim 9, at least one detection device which is configured to determine a state of a traffic light system (4), and a control device which is configured to longitudinally control the motor vehicle (1) depending on the determined quality measure.

## Revendications

1. Procédé pour la commande d'un véhicule automobile (1) à une installation de signalisation lumineuse (4), dans lequel
- un état de l'installation de signalisation lumineuse (4) est déterminé au moyen d'au moins un dispositif de détection (V1),
- en fonction d'au moins un facteur d'influence pour la détection de l'état de l'installation de signalisation lumineuse (4), une mesure de qualité pour l'état détecté est fixée (V2),
- dans le cas d'une mesure de qualité élevée déterminée, une commande longitudinale du véhicule automobile (1) est effectuée au moyen d'un dispositif de commande en fonction de l'état déterminé de l'installation de signalisation lumineuse (4) (V3a) ;
- dans le cas d'une mesure de qualité moyenne déterminée, une émission d'une invitation à entrer une confirmation pour un occupant du véhicule est effectuée, dans lequel l'occupant du véhicule est prié, au moyen de l'invitation, de confirmer l'état déterminé de l'installation de signalisation lumineuse (4) comme étant correct ou de le rejeter comme étant faux (V3b), dans lequel, à la réception d'une entrée utilisateur caractérisant la confirmation, le véhicule automobile (1) est commandé longitudinalement au moyen du dispositif de commande en fonction de l'état déterminé de l'installation de signalisation lumineuse (4) (V4a),
**caractérisé en ce que**
- à la réception d'une autre entrée utilisateur caractérisant le rejet, une demande de prise en charge est émise à l'occupant du véhicule, laquelle caractérise le fait que l'occupant du véhicule doit prendre en charge la commande longitudinale du véhicule automobile (1) (V4b), et **en ce que**
- dans le cas d'une mesure de qualité faible déterminée, une émission de la demande de prise en charge à l'occupant du véhicule est effectuée (V3c).

2. Procédé selon la revendication 1, dans lequel, conjointement avec l'émission de la demande de prise en charge, une commande longitudinale active du véhicule automobile (1) est désactivée au moyen du dispositif de commande.

3. Procédé selon la revendication 1 ou 2, dans lequel la mesure de qualité est en outre déterminée en fonction d'une complexité d'une situation de régulation du trafic commandée par l'installation de signalisation lumineuse (4).

4. Procédé selon la revendication 3, dans lequel au moins l'un des facteurs suivants est pris en compte pour la détermination de la situation de régulation du trafic :
- nombre de voies de circulation (5)
- tracé des voies de circulation (5) respectives
- nombre d'installations de signalisation lumineuse (4)
- affectation géométrique d'installations de signalisation lumineuse (4) respectives à des voies de circulation (5) respectives.

5. Procédé selon l'une des revendications précédentes, dans lequel un type de l'au moins un dispositif de détection est pris en compte comme facteur d'influence.

6. Procédé selon l'une des revendications précédentes, dans lequel un nombre de dispositifs de détection est pris en compte comme facteur d'influence.

7. Procédé selon l'une des revendications précédentes, dans lequel une condition d'environnement actuelle non liée au trafic est prise en compte comme facteur d'influence.

8. Procédé selon l'une des revendications précédentes, dans lequel la mesure de qualité est déterminée en fonction d'une mesure de qualité pour la détection de l'état de l'installation de signalisation lumineuse (4).

9. Dispositif de calcul électronique pour un véhicule automobile, lequel est configuré pour
- recevoir un état d'une installation de signalisation lumineuse (4) déterminé par un dispositif de détection,
- en fonction d'un processus de détection de l'installation de signalisation lumineuse (4) au moyen du dispositif de détection, fixer une mesure de qualité pour l'état détecté,
- dans le cas d'une mesure de qualité élevée déterminée, déclencher une commande longitudinale du véhicule automobile (1) au moyen d'un dispositif de commande en fonction de l'état déterminé de l'installation de signalisation lumineuse (4),
- dans le cas d'une mesure de qualité moyenne déterminée, déclencher une émission d'une invitation à entrer une confirmation pour un occupant du véhicule, dans lequel l'occupant du véhicule est prié, au moyen de l'invitation, de confirmer l'état déterminé de l'installation de signalisation lumineuse (4) comme étant correct ou de le rejeter comme étant faux, et déclencher alors, à la réception d'une entrée utilisateur caractérisant la confirmation, une commande longitudinal du véhicule automobile (1) au moyen du dispositif de commande en fonction de l'état déterminé de l'installation de signalisation lumineuse (4),
**caractérisé en ce que**
l'unité de calcul électronique est en outre configurée pour
- à la réception d'une autre entrée utilisateur caractérisant le rejet, déclencher une émission d'une demande de prise en charge à l'occupant du véhicule, laquelle caractérise le fait que l'occupant du véhicule doit prendre en charge la commande longitudinale du véhicule automobile (1), et pour
- dans le cas d'une mesure de qualité faible déterminée, déclencher une émission de la demande de prise en charge à l'occupant du véhicule.

10. Véhicule automobile (1), comportant un dispositif de calcul électronique selon la revendication 9, au moins un dispositif de détection qui est configuré pour déterminer un état d'une installation de signalisation lumineuse (4), et un dispositif de commande qui est configuré pour commander longitudinalement le véhicule automobile (1) en fonction de la mesure de qualité déterminée.
